# EUROPEAN PATENT SPECIFICATION

(11) **EP 4 546 709 B1**
(45) Date of publication and mention of the grant of the patent: **17.09.2025**
(21) Application number: 23205428.8
(22) Date of filing: 24.10.2023
(51) Int. Cl.: H04L 9/32, H04L 9/00, H04L 9/40

(54) **SELF-SOVEREIGN IDENTITY TECHNIQUES**
SELBSTÜBERELIGNE IDENTITÄTSTECHNIKEN
TECHNIQUES D'IDENTITÉ AUTO-SOUVERAINE

(43) Date of publication of application: 30.04.2025
(73) Proprietor: Deutsche Telekom AG, 53113 Bonn (DE); Technische Universität Berlin, 10623 Berlin (DE)
(72) Inventor: SCHNEIDER, Daniela, 1150 Wien (AT); Einsiedler, Hans Joachim, 13189 Berlin (DE); Rodriguez Garzon, Sandro, 14169 Berlin (DE)
(74) Representative: Braun-Dullaeus Pannen Emmerling Patent- & Rechtsanwaltspartnerschaft mbB

(56) References cited:
- SANDRO RODRIGUEZ GARZON ET AL: "Towards Decentralized Identity Management in Multi-stakeholder 6G Networks", ARXIV.ORG, CORNELL UNIVERSITY LIBRARY, 201 OLIN LIBRARY CORNELL UNIVERSITY ITHACA, NY 14853, 11 July 2022 (2022-07-11), XP091267138
- SANDRO RODRIGUEZ GARZON ET AL: "Decentralized Identifiers and Self-sovereign Identity in 6G", ARXIV.ORG, CORNELL UNIVERSITY LIBRARY, 201 OLIN LIBRARY CORNELL UNIVERSITY ITHACA, NY 14853, 4 August 2022 (2022-08-04), XP091287211

## Description

The invention relates to techniques that enable authorization and/or authentication of network elements, in particular in an automated fashion, in a communication system. In particular, the invention enables that an unknown foreign network element can be implemented within the network environment of the network operator.

Today's technical devices like network entities, network elements and/or the communication networks themselves, in particular LTE, 5G and/or 6G networks, are more and more incorporated into a cloud environment infrastructure that brings a demand of an increasing level of automation procedures when implementing those network entities. This is the case if the network entities are being implemented within the network of one network operator and this is also the case for interactions between different networks of different network operators.

An increasing level of automation and dynamics when dealing with network elements and/or networks (e.g. on demand implementation of new network entities) leads to the necessity that all security and trust management, in particular between different stakeholders and/or between different network elements, can be established and managed on demand, automated, and in a flexible manner. It would be important to be able to automatically create trust between network elements that do not know each other and that may even be in different networks and therefore belong to different stakeholders. This is not possible so far.

Currently, typically used concepts of trust management use centralized (and hierarchical) certificate management, which results in complex and inefficient configuration management and performance issues. Furthermore, if a single part of the certification management infrastructure is being compromised, the whole certificate infrastructure needs to be set up from scratch again in order to ensure full security. This is very time-consuming, work intensive and costly.

Due to a heterogeneity of today's identity management (IDM) systems in communication environments like 4G/5G, the lack of globally trusted CAs and an increasing demand of identity subjects (IS) for personal data protection, a fundamentally different and unified approach to IDM shall be adopted in communication environments, in particular in 6G. Future digital identities shall meet the following fundamental requirements to be suitable for future-proof IDM in multi-stakeholder networks:
- Universality: They do not only represent subscribers, but any IS that is involved in the usage and provision of mobile or fixed line connectivity and related services, including but not limited to IoT devices, mobile network operators (MNOs), virtual mobile networks, cloud or IoT operators, manufacturers, or even network functions (NF).
- Privacy-preserving: They neither reveal the real identity of an IS nor consist of any personal data related to the real identity of an IS.
- Interoperability: They are all unique, machine-readable, of standardized format, and commonly accessible.
- Verifiability: They are cryptographically verifiable to enable the referred IS to proof ownership over the digital identity and others to proof the validity of personal data shared by the referred IS.
- Extensibility: They are extensible with respect to the supported verification methods due to the diversity of potential application areas.
- Independence: They can be created, edited, and used for verification purposes independently of corporates, organizations, and governments, including identity provider and CAs (Certification Authority).

For that purpose, Decentralized Identifiers (DID) can be used to manage identities in a decentralized manner without centralized identity databases and CAs. The decentralization aspect of DIDs bears the inherent potential to unify access management procedures e.g. in 6G across-domains by using a DL among all involved actors of a PLMN ecosystem as the single source of truth for non-privacy-sensitive access management data. A DID infrastructure makes it also possible to store DIDs according to the principles of Self-Sovereign Identity (SSI) privacy-preserving in a VDR (Verifiable Data Registry) like a database or a distributed ledger or any other storage solution.. Applying DIDs in communication systems to decentralize IDM will not only lower the risk of having a single point of failure or attack due to the removal of CAs but they will also enable MNOs to adhere to privacy-by-design principles with SSI.

A DID is a unique identifier, that can comprise an alphanumeric string, that refers to an IS (here denoted as a DID subject), and resolves to a DID document. A DID subject can be a person or any type of network element, e.g., a subscriber, an MNO or a NF. A DID document can also comprise among other information, verification material, e.g., a public key of the DID subject for authentication, authorization, and other purposes. Hence, a DID can bind a DID subject to its DID document just like a X.509 certificate binds an identity to a public key. Neither the DID nor the DID document need to reveal or contain any personal data. The fundamental idea of the DID concept is to manage and share non-privacy-sensitive verification material in the form of DID documents among interacting stakeholders, e. g. via a DL while the associated privacy-sensitive personal data of a DID subject is kept locally, off the DL, ideally at the DID subject's respectively stakeholder's premises. Hence, the DL can be used to persist and share identity-related data in a fully synchronized and tamper-proof manner among all actors of a multi-stakeholder network.

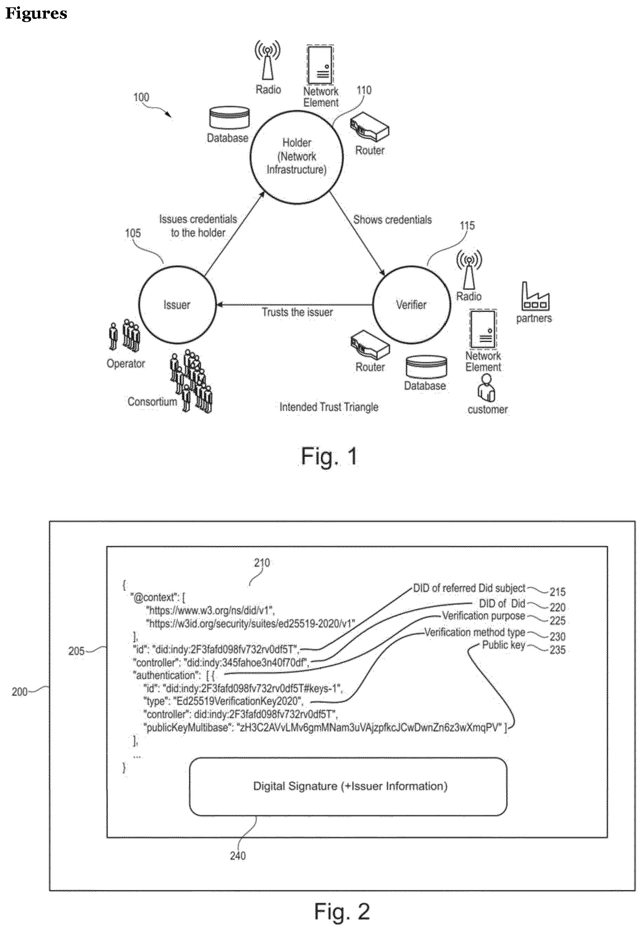

Self-sovereignty over any information describing an entity is the principal objective behind the latest SSI paradigm. All digital information, which are related to an identified or identifiable subject, e.g., the social security number, should ideally be held and managed solely by the IS. With SSI, the decision whether at all, to whom and to what extent personal data (credentials) are disclosed lies solely with the IS. To establish a trust relationship between two ISs that have not yet interacted with each other, it is beneficial for the ISs to exchange credentials that have been approved by a 3rd party that are equally trusted by both ISs. So, for the purpose of trust building with SSI, an IS (role: holder) can disclose to another IS (role: verifier) its very own credentials in the form of verifiable credentials (VC) that has been previously approved, digitally signed and handed over to the holder by a 3rd IS (role: issuer). For example, a potential customer (holder) discloses its social security number, as issued by governmental authorities (issuer) as a VC, to an MNO (verifier) for setting up a mobile phone plan. The trust triangle shown in Fig. 1 in SSI is only viable if the issuer's approval of the disclosed claim is cryptographically verifiable by the actor consuming the credentials (the verifier). SSI thus not only proclaims that privacy-sensitive credentials should be hold and managed by solely the IS, but that the credentials could also be approved by a trustful 3rd party and be verified by others. This makes SSI a new fundamental concept to enforce privacy preservation and to enable trust building between actors of different trust domains. The document "Towards Decentralized Identity Management in Multi-stakeholder 6G Networks," XP091267138, published at the 1^{st} International Conference on 6G Networking (6GNet 2022), 11^{th} July 2002, Paris, France, discusses the concept of decentralized identity management using DIDs and VCs in 6G networks.

In the view of above, it is an object of the present invention to provide techniques for efficient trust management in communications systems, and to at least overcome some drawbacks of the current state of art. It is also an object of the invention to provide DID management and/or creation in a reliable and secure way for new network elements. It is a further object of the invention to provide automated VC issuing.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

It is a core idea of the invention to apply the concept of SSI (Self-Sovereign identity) to network elements functions to enable their trust management in a communication system, in particular for authentication and/or authorization between them. This enables network elements to use the SSI concept in a similar way like humans currently do. The network elements are being provided with DID-bound VC that can be used by the network element to authenticate and/or authorize itself towards other network elements in a decentralized way. The communication system can be an Intranet, a 4G, a 5G, a 6G communication system and/or a combination of those different communication systems or any other type of communication network e.g. fixed or WLAN networks. Decentralized identity management for network elements is preferred so that the risk of a "single point of failure" can be reduced. The digital identity of a network element comprises identity attributes (AuthN VCs) and authorizations (AuthZ VCs) that it requires for authentication and authorization. A decentralized key management via a VDR is preferably disclosed in order to simplify or make easier/efficiently administrable the cross-network key exchange that is needed for the decentralization of identities but also independently in general/whatever for the cross-network authentication and authorization.

For that purpose, different network elements can serve different functionalities regarding the trust management, wherein at least some of those network elements can communicate with each other like shown in Fig. 1 in a kind of trust relation 100. i) An issuer network element 105, in short simply "an issuer" 105, that can be a trusted authority trusted by all parties of the communication system, for example a governmental authority, can generate verifiable credential (VC) by binding an identity of a network element to the network element's DID and digitally sign it to obtain a DID-bound VC. The trust element can also obtain a public key of a holder network element 110. The issuer 105 can put a digital signature on the DID-bound VC so that other parties that obtain the information can see who created the digital signature and/or wherein the digital signature prevents the DID-bound VC from data manipulation. The issuer 105 can provide the trust element to the holder network element 110. ii) The holder network element 110, in short "the holder 110", is the network element that shall play a functional part to provide communication services within the communication system by interacting with the communication system. If the holder 110 shall be implemented within the communication system it shall be able to provide its own identification according to the SSI concept, in particular by having its own DID-bound VC. It can show its DID-bound VC to other network elements, for example a verifier network element 115, that can verify the appropriate credentials. iii) the verifier network element 115, in short "the verifier" 115, wants to set up a communication service with the holder 110. The verifier 115 can verify the signature of the DID-bound VC with the help of the issuer's public key which the verifier 115 will find in the issuer's DID document that is stored in the VDR.

Hence, the concept of SSI can comprise
- DIDs (decentralized identifier) serving as identifiers and/or for key management for establishing secure communication between network elements and/or network functions. In particular, the DIDs according to the invention can comprise the public key of the network element and/or the network function and it can also contain other data. The DID can be stored in a centralized trusted database, the so-called VDR, and/or within the network element, in particular in a secure wallet. Clarification on the distinction between the DID, the actual identifier, and the DID document. A public DID is an identifier for a real or virtual subject (e.g. a NF) and references a DID document. This DID document, wherever that is stored, contains, among other things, in particular public key material of the network element to which the DID belongs. The DID document can be located in a VDR. A VDR can be operated centrally but also decentrally. With a private (peer) DID, however, the DID document can be read out of the DID. This means that you do not need a VDR for a private DID. In both cases, the public key material is needed, for example, to establish secure connections, but also in particular to check the authenticity and integrity of VCs and VPs; and
- DID-bound VCs comprising attributes with which the network elements and/or network functions can prove their identity. A DID-bound VC can be used to prove identity attributes such as name (for authentication) or e.g. permission (for authorization), but at the same time to prove ownership of the DID to which the VC is bound. With a DID-bound VC, the holder thus provides the verifier with two proofs in one: DID ownership and claim ownership. The VC according to the invention can be configured to provide authentication and/or authorization information, can contain the digital signed credentials and possibly further information about the issuer. The VC can be stored in the secure wallet of the holder 110.

Within the context of this invention, the term network element comprises actual network hardware units like servers, base stations, routers, UEs, IoT devices, proxy, switch, DNS, and/or network functions like an AMF, SMFs, firewall software, DHCP servers. In other words, the network element is basically an entity that provides a kind of functionality of a network environment. In that sense, if the network element is a hardware unit than it can comprise a network function.

In the following, if functional elements are described within the context of the invention, it is to be understood that those elements can functionally be implemented as software for example on servers of the network operator. This is the concept of virtualization of modern communications systems, wherein elements are being virtualized and implemented as software and need not to be standalone hardware units as it was the case in the past.

According to a first aspect of the invention, a method is disclosed to enable implementation of a network element within a network infrastructure of a network operator. The network infrastructure can be the communication system. The method comprises the following steps:
- providing and/or creating a Decentralised Identifier (DID), a private key, a public key and verifiable credentials (VC) for the network element;
   ∘ the DID refers to the network element; in particular, the DID is unique within a defined communication environment. In principle, if two communication systems are considered that cannot communicate with each other then, in principle, the DID needs not to be unique;
   ∘ the public key contained in the DID document of a target network element can be used by further network elements (here source network elements) to encrypt the message towards the target network element, wherein only the target network element can decrypt this message by using the corresponding private key; this ensures confidentiality, because only the target network element is being provided with a private key and is able to decrypt the message;
- binding the VC to the DID resulting in a DID-bound VC and digitally signing the DID-bound VC by the issuer;
   ∘ Verifiable credentials are a digital representation of information or claims about the network element that can be securely and cryptographically verified by others; the DID-bound VC connects the VC and the DID one element. It is of further advantage to sign the DID-bound VC with the digital signature so that its authenticity and integrity can be guaranteed; further network elements can then be sure that the DID-bound VC's originator is the expected issuer and that it was not altered by anyone since its creation and evaluate how to interact with the network element of the DID-bound VC; The VC can be provided by the trust issuer, the DID-bound VC can also comprise the functionality and/or the scope of the network element;
   ∘ DID-bound VCs can be described as VCs where the subject of the claim is referenced by a DID. Technically, this means that the "id" attribute in the "credentialSubject" attribute contains a DID;
- providing the DID-bound VC and the private key to the network element.

As an advantage, the steps of the method enable a network element to authorize and/or authenticate itself towards further network elements, in particular by providing the technical means for this authorization and/or authentication. In principle, implementation of the network element without further interaction with humans as network controllers is being possible in an automated fashion. In particular, a network orchestrator of network operator can evaluate a demand for a certain network functionality of the network, then request a dedicated network element that provides this functionality and the network orchestrator can check the authorization and/or authentication of this network element before implementation in the network so that it can trust the network element even if it is provided by a foreign party.

In an embodiment, the network element is provided as a hardware realization and/or as a software realization for the implementation process of the network operator, wherein the software realization of the network element is instantiated by the network operator or by another network operator by creating a software component that can comprise the DID-bound VC, a network function code (that can be a business logic) of the network element. In a further embodiment, the a software component is comprising the the key pair and the DID-bound VC. The case of the hardware realization covers the case if the network element is being already provided with its DID-bound VC so that it can be sold ready-for-implementation by a manufacturer. The case of the software realization in particular covers the case that the network orchestrator of the network operator creates the software realization because there is a certain demand for this network functionality within the communication system of a network operator. Implementation is to be understood as the broader process of building and/or configuring an entire network or communication system according to a predefined design, while instantiation is the specific act of creating individual instances or elements based on templates, which can be part of the implementation process, especially in virtualized or cloud-based environments. In the case that the software package is actually a new component, this provides the advantage that the network function can be added in a flexible way before or after the creation of the DID-bound VC. In the case of the software realization, the instantiated network element can be provided to the network operator and/or the further network operator for implementation and its communication system in the realization of the DID-bound VC and/or as the software component. The DID-bound VC and/or the software component can also comprise the scope of the network function, a type of service of the network element, and information about the network operator that instantiated the network element. The software component can also comprise the private key of the network element. However, the private key is kept secret within the network element.

This provides a very flexible way to upgrade or adjust the functionalities of a communication system of the network operator or even of home users that by the network elements as IOT devices..

In an embodiment, the network element is provided as a hardware or software realization for the implementation process of the network operator, wherein the software realization of the network element is instantiated by the network operator by creating a software component comprising the actual business logic of the network element, a secure digital wallet, the DID (including the key pair) and/or the DID-bound VCs.

In an embodiment, the instantiation process is performed before the implementation process.

This provides the advantage that the network element is being ready for authorization and/or authentication in the implementation process.

In an embodiment, the orchestrator of the network operator controls the instantiation process, wherein the orchestrator selects the network function code according to demands of the network operator.

This has the advantage that the orchestrator is the instance that is being responsible for putting up the network functionalities and therefore knows which functionalities are missing, required and/or needed.

In an embodiment, the software component is combined, in particular by an orchestrator of the network operator, with a wallet software to allow secure storage of the VCs. The private key is also stored within the wallet software and can be part of the software module. Wallet functionalities include, for example, storing private keys, VCs, and/or digitally signing VCs for presentation purposes.

This has the advantage of securing the software component and/or the private key and the associated information within the network element from accessing these information by other entities. Only the network element has access to the wallet and can decide to use certain elements of the wallet for example to show its DID-bound VC to further network elements or use the private key to encrypt the message.

In an embodiment, the DID, the private key, and/or the public key is created by the network element or by a DID manager function (DMF).

In an embodiment where the DMF creates the DIDs the network operator is in full control of the DID management and is able to provide the DID of the new network element to the SSI-M upfront. As soon as the network element then requests additional VCs at the SSI-M the SSI-M can verify that the requesting network element is a real network element of the operator and not a 'fake' network element instantiated by an intruder. A creation by a DMF has the further advantage that it can guarantee the uniqueness of the DID by querying or checking with a VDR. If a network element without access to a VDR creates a DID, there is a chance, although highly unlikely, that the DID is already in use. Another advantage is that the critical process of the provision of the underlying key pair of the DID happens within the secure onboarding infrastructure. On the other hand, if a network element creates its own DID, then it needs to communicate at some point its created key pair to the DMF across a potentially untrustful environment and without being able to authenticate with the DID because it's yet not anchored in a VDR. The advantage of a creation by a network element is that the resources-consuming key generation process can be outsourced to the execution environment of the network element. The DMF is always in the loop and needs to be aware of existing DIDs and their underlying key pairs so that the orchestrator can reuse a digital identity (DID+VCs) of a former NF, e.g., once the former NF instance fails for any reasons and needs to be restored.

In an embodiment, the creation of the DID-bound VC is performed by at least one trusted issuer manager element or a trusted issuer manager element functionality - called a "SSI-M" - of a first network operator and/or of a second network operator and/or by a trusted issuer root element or a trusted issuer root functionality - called a "SSI-R" - of a first network operator and/or of a second network operator. The SSI-M and/or the SSI-R can be implemented as software within the communication infrastructure of the network operator, in particular within the core elements of the communication system.

In case of the SSI-M, this provides the advantage that the SSI-M represents a dedicated point of contact for network elements to get DID-bound VCs issued for authentication and/or authorization purposes. The SSI-M can be located at various places within the infrastructure of the communication system to provide redundancy, load balancing, and fast response. The SSI-M can also be set up according to a certain hierarchy so that different SSI-Ms provide different VCs to network elements, e.g., some SSI-Ms issue VCs for authentication and other SSI-Ms issue VCs for authorization purposes. A hierarchy of SSI-Ms is created by allowing SSI-Ms to delegate rights to issue VCs for network elements to other SSI-Ms. A hierarchy of SSI-Ms makes it possible to involve some SSI-Ms (e.g. at the bottom of the hierarchy) in the VC issuance process for network elements while other SSI-Ms (e.g. at the top of the hierarchy) act only as delegators and can thus be safeguarded properly. For example, the topmost SSI-M of a hierarchy of SSI-Ms, denoted as SSI-R, can be relieved from the critical operational task of VC issuance to network elements and thus do not need to be reachable be network elements. In other words, it does need to offer an interface for network elements, thereby reducing the attack surface. However, in particular, in very small network communications systems it is still possible that the SSI-R is directly involved in the VC issuance process for network elements.

In an embodiment, the SSI-R is the highest trust authority within the network of the first network operator or of the second network operator, wherein the SSI-R issues DID-bound-SSI-M-VCs with a DID of the respective SSI-M to the at least one SSI-M and issues the right to the at least one SSI-M to create the VCs and to bind the VC to the DID resulting the DID-bound VC for the network element.

In an embodiment, the SSI-R is the highest trust authority within the network of the first network operator or of the second network operator, wherein the SSI-R issues - the right to issue VCs for network elements to SSI-Ms and - optionally - the right to subdelegate this right to other SSI-Ms. These delegations are also encoded as VCs, denoted from now on as Delegation VCs. However, they are different VCs to the ones network elements receive because they contain delegation rights and not identity claims for network elements.

This provides the advantage that a hierarchy is being built up that shields the SSI-R, as being the highest trust authority, from the communication with other network elements respectively to delegate the critical tasks away from the SSI-R. Additionally, a hierarchy of SSI-Ms has the advantage that the issuance process for network elements can be distributed among multiple SSI-Ms for load balancing reasons and/or to properly reflect the organizational hierarchy of a network operator within a hierarchy of SSI-Ms.

In an embodiment, the SSI-R holds an operator-DID of the first network operator or the second network operator, wherein the operator-DID can additionally be stored within the DID-bound VC.

Delegation VCs are issued from the SSI-R (using the operator-DID) to the DID of an SSI-M. An SSI-M can then, if it owns the right to do so, issue delegation VCs to other SSI-Ms and so forth. If an SSI-M issues VCs to a network element, the VCs include all the delegation VCs up to the SSI-R, starting to the SSI-M issuing VCs to the network element, over the SSI-Ms in between delegating just the rights, until the SSI-R.

This has the advantage that if a network element receives a VP from another network element, e.g., for authentication and/or authorization purposes, it can cryptographically verify not only that the SSI-M really issued the underlying VCs, but, in particular, that all delegations included in the VP are cryptographically valid until it reaches an SSI-M, e.g. the SSI-R, which is trusted by the verifying network element. In other words, VCs issued to network elements by the SSI-Ms will always include at least one delegation VC issued by an SSI-R, unless the network element receives its VCs directly from the SSI-R. This encapsulation of delegation VCs into VCs issued to network elements has the advantage that a verifying network element does not need to know or be in a trust relationship with an SSI-M that is directly or indirectly involved in the issuance of the presented VC. But it can still trace back the presented VP to an issuer that it knows and trusts, even it is the last in the trust chain, the SSI-R.

In an embodiment, the SSI-R, one of the SSI-M or a DID manager function "DMF" stores the stores the DID of the network element, the DID of the SSI-R and/or the DID of the SSI-M in a trusted VDR database.

VCs are not stored in the VDR. DID documents comprising the DID, public keys and service endpoints are stored in the VDR. VCs are preferably stored by the DID owner (to whose DID the VC is bound). However, the issuers (SSI-R and SSI-M) can remember which VCs they have issued so that they can revoke them. If revoking is not desired, e.g. because VCs have a validity period and security policies tolerate incidents in which an VC becomes trustless (e.g., because of a sudden breach into the network element) but remain valid till the end of the validity period, then issuers do not need to remember VCs at all.

This provides the advantage that only certain, in particular trusted, network components can store the DID documents within the trusted VDR database. This storing or removing of entries is important because the VDR database is being used by the further network elements to authenticate and/or authorize the network element by comparing if the corresponding matching DID document is stored within the VDR. A VDR (not a trusted issuer registry) in the case of a public DID of network element ensures for others that the DID document contained there is the only true one from the network element. This allows the network element to authenticate (not authorize) itself to others pseudo-anonymously. That is, technically prove to others that it is the DID owner. Nothing more. The other still does not know who is behind the DID. Only by using DID-bound VCs and thus a trustworthy third party, the identity becomes clear. Authentication = Pseudo-anonymous authentication with DIDs + identification with VCs. With a private (peer) DID, no VDR is necessary. In an embodiment, it is possible that the DID-document is only valid for certain time period. In this case, the SSI-R, one of the SSI-M or a DID manager function are allowed to remove or declare invalid the corresponding entry from the VDR database again. Preferably, both the second network element and the SSI-M access the public key of the NE (otherwise authentication would not work) and both can be operated by the first or second network operator. Reason why SSI-M: The SSI-M of a second operator could issue authorization VCs to the NE. To do this, however, the NE must first identify itself to this operator with VCs.

In an embodiment, the network element provides its DID-bound VC in the implementation process to a second network element and/or to the SSI-M to authenticate and/or authorize itself, wherein the second network element and/or to the SSI-M is also provided with the public key of the network element, wherein the second network element and/or to the SSI-M is operated by the first network operator or a second network operator. This provides the advantage that the network elements can authenticate and/or authorize each other in an automated fashion to facilitate a trustworthy implementation in the communication system of network operator.

In an embodiment, the second network element and/or the SSI-M verifies a signature of the DID-bound VC, and wherein the network element) is authenticated and/or authorized if the signature of the DID-bound VC is valid. It is relevant that a network element is authenticated if the presented VC - called VP - is cryptographically valid, i.e. digitally signed by the entity specified as the issuer in the VP and optionally digitally signed again by the DID owner. Each VP is preferably digitally signed twice: by the issuer and by the DID owner (as the network element). However, the verifying network element naturally wonders whether it can trust the issuer at all. If the DID document from the issuer is in a trusted issuer registry (implemented by VDR), then it can trust the issuer by definition. If it resides elsewhere, whether in another VDR or extracted from the DID, then the network element may be considered "trustless" authenticated. So technically authenticated, but non-technically untrustworthy.

In an embodiment, the second network element and/or the SSI-M verifies the digital signature of the first network element (role:holder) and the digital signature of the issuer within the DID-bound VC, and wherein the first network element is authenticated and/or authorized if both digital signatures of the DID-bound VC are valid and the issuer is trusted by the second network element and/or the SSI-M. It is relevant that a network element is authenticated if the presented VC - called VP - is cryptographically valid, more precise, digitally signed by the entity specified as the issuer in the included VC and digitally signed by the DID owner. Each VP is preferably digitally signed twice: by the issuer and by the DID owner (as the network element). However, the verifying network element naturally wonders whether it can trust the issuer at all. If the DID document from the issuer is in a trusted issuer registry (implemented by VDR), then it can trust the issuer by definition. If it resides elsewhere, whether in another VDR or extracted from the DID, then the network element may be considered "trustless" authenticated. So technically authenticated, but non-technically untrustworthy.

This provides the advantage that the trusted VDR can be used basically by all network elements to check the validity of the VP. In particular, the VDR database can be run by a trusted governmental authority or by a consortium of trusted network operators. If the issuer's digital signature of the DID-bound VC turns out to be invalid by using the key material of the issuer's DID in the trusted VDR, then it can be concluded that the VC was intentionally modified after its creation by an entity different to the issuer or the VC was never issued by the issuer.. Only after successful authorization and/or authentication of the network element, the network element can be implemented within the network infrastructure of the first network operator and/or within the infrastructure of the second network operator.

According to a second aspect of the invention, a network element for implementation in a network infrastructure of a communication system of a network operator is disclosed, wherein the network element comprises a DID-bound VC, and a private key, wherein the network element is configured to authenticate and/or authorize itself by sending its DID-bound VC to a further network element.

This provides the advantage that this inventive network element can authorize and/or authenticate itself in a decentralized and automated way towards other network elements, in particular towards a further network element

The network element can also be configured to receive the DID-bound VC from the further network element and to check the authorization and or authentication of the further network element by comparing the DID-bound VC with the entries of the trustworthy VDR. It is also possible that the network element requests this comparison from the VDR database.

The network element can also comprise interfaces to communicate with the SSI-M and/or SSI-R, and is configured to request the DID-bound VC from the SSI-M and/or SSI-R. The network element can also comprise a valid software to store the DID-bound VC and/or its private key. The network element can also be configured to generate the DID and the key pair of the public and the private key. In principle the public key can be delivered to the further network element by other means than the network element because it is public does in principle not require advanced security precautions.

According to a third aspect of the invention, a trusted issuer root manager - called a "SSI-M" - of a network operator is disclosed , wherein the "SSI-M" manages to provide DID-bound VCs to network elements of the network operator and is configured
- to create a VC and to bind the VC to the DID resulting in the DID-bound VC for the network element, to digital sign the DID-bound VC and to provide the DID-bound VC to the network element.

According to a fourth aspect of the invention, a trusted issuer root element - called a "SSI-R" - of a network operator is disclosed, wherein the "SSI-R" is the highest trust authority within the network of the network operator and is configured
- to create a VC and to bind the VC to the DID resulting in a DID-bound VC for the network element, to digitally sign the DID-bound VC and to provide the signed DID-bound VC to the network element;
- to create a digital signature;
- to store and/or provide an operator-DID; and/or
- to issue and/or to delegate the right to the SSI-M described above to create the VC and to bind the VC to the DID resulting in the DID-bound VC for the network element.

The SSI-Ms can also sub-delegate issuance rights.

The SSI-R can also give an SSI-M the right to delegate this issuance right to other SSI-Ms.

According to a fifth aspect, a communication system configured to execute the method described above is disclosed.

### Figures

In the following, preferred implementation examples of the present invention are explained with reference to the accompanying figure:
- Fig. 1:: shows a trust triangle;
- Fig. 2:: shows a network element and/or a network function comprising a DID;
- Fig. 3:: shows the relationship between a SSI-R and a SSI-M;
- Fig. 4:: shows the principles of multi-issuer delegation within the same network;
- Fig. 5:: shows the principles of multi-issuer delegation within different networks;
- Fig. 6:: gives an overview over components that can be used within a SSI infrastructure;
- Fig. 7:: gives an overview of the SSI infrastructure;
- Fig. 8:: shows an onboarding procedure of the new network element and/or network function within the SSI infrastructure according to an option a);
- Fig. 9:: shows an onboarding procedure of the new network element and/or network function within the SSI infrastructure according to an option b);
- Fig. 10:: shows an onboarding procedure of the new network element and/or network function within the SSI infrastructure according to an option c);
- Fig. 11:: shows an onboarding procedure of the new network element and/or network function in a network of foreign network operator;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

If certain features are explained within the context of different figures, they might be introduced again by using the indefinite article. Nevertheless, it is to be understood that these features are being identical throughout the different figures if not explained otherwise. For example feature SSI-R is being described in this way but it is nevertheless always the same SSI-R. The reason for newly introducing those features is that each of the figures can have its own reference signs that can make the explanation clearer within a specific figure.

We start with a description of how DIDs can technically be provided to network elements and/or network functions, which components are needed along with a description embodiments of the corresponding procedure. The DIDs can be used to identify network elements and/or network functions that shall be implemented within a communication system.

Within the context of this invention, the term network element comprises actual network hardware units and/or network functions like. In other words, the network element is basically an entity that provides functionality of network environment. In that sense, if the network element is a hardware unit than it can comprise a network function.

Fig. 2 shows a network element 200 comprising a DID-bound VC 205. The DID-bound VC 205 can be implemented on a network element 200, in particular it can be implemented within a network function's code. Basically, the DID-bound VC 205 can comprise a DID, a digital signature with issuer information and/or a further digital signature with holder(presenter) information. In a further possible embodiment, the DID-bound VC 205 can comprise i) a DID of a DID-subject. i.e. the network element, ii) an issuer-DID 220 of the issuer 105, iii) a verification purposes 225, iv) a verification method type 230, and/or v) a public key 235 of the network element 200 and/or the network function. In particular, the network function can be implemented on the network element 200.

The DID-bound VC 205 can further comprise a digital signature part 240, wherein the digital signature 240 is put on the DID-bound VC 205 by the issuer 105 and wherein the digital signature part 240 can also comprise information about the issuer 105. The DID-bound VC 205 is digitally signed in a way that data manipulation is being prevented or at least that it becomes obvious if data manipulation has been performed.

The DID document 210 enables the basic key management for the network element 200 as the DID document 210 can contain not only the decentralized identifier but also the public key 235 of the network element 200 and/or the network function's code.

DIDs 215 in combination with authentication VCs can also be used to prove the identity of the network element 200 to other components in the communication system. DIDs 215 can be used to bind VCs (which will be described in the following) to the network element 200, in particular as a trust element 205. That means that only a VC with a reference to a DID 215 binds the VC to that network element 200 and/or that network function that owns the DID 215.

For example, if the network element shall be instantiated within a communication system to provide a certain communication service, an automated verification process can work as follows: The DID 215 and the public key of the holder 110, wherein the holder can be the network element 200, is part of the VCs that is presented to the verifier 115, which can be a further network element.. The holder 110 presents a verifier 115 a verifiable presentation (VP) which comprises the VC. The verifier 115 verifies the issuer's digital signature of the VC with the help of the issuer's public key which is either provided by the VDR (public DID) or extracted from the issuer's DID (peer DID). The verifier 115 also verifiers the holder's digital signature of the VP with the help of the holder's public key which is either provided by the VDR or extracted from the holder's DID (peer DID). If both digital signatures are valid (means that the integrity and authenticity of the VC and VP are guaranteed) and if the DID (215) of the claim matches the DID of the holder, then the holder is technically authenticated and/or authorized towards the verifier.

In the following, it is shown how the network element can be provided with a DID-bound VC 205, in particular how the network element can be assigned to the respective DID 215.

By using the DID-bound VC 205, the following security mechanisms can be enabled:
i) the possibility to clearly verify the identity of the network element 200, ii) the possibility to enable secure communication between network elements; iii) the possibility to enable usage of DID-bound verifiable credentials for authentication and/or authorization;

In the following, different options are being described how the DID 215 can be provided to the network element and/or the network function.

Before the network element 200 is being instantiated and/or during the instantiation process, the DID 215 needs to be created for that network element 200. This can be done as follows:
a) the DID 215 is created by a dedicated component of the onboarding infrastructure of the communication system and provided to the network element 200 and, if it is a public DID, a VDR (verifiable data registry) during an onboarding process; in all embodiments, the VDR can hold at least a subset of DID documents 210;
b) the DID 215 is created by a dedicated component of the onboarding infrastructure of the communication system and provided to the network element 200 and, if it is a public DID, the VDR before the onboarding process; the network element 200 itself can request the VCs after instantiation at a VC provisioning component;
c) the DID 215 is created by the network element 200 during actual or before instantiation and is being provided to a SSI infrastructure, in particular to the VDR, by the network element. Then, VCs are requested at the VC provisioning component by the network element itself, wherein the VC provisioning component can bind the DID document 210 to the VCs.

Option a) has the advantage that all information of the digital identity of the network element is preconfigured within the secure and trustful environment of the onboarding infrastructure before the network element is instantiated.

Option b) has the advantage that the critical task of DID creation and assignment to the network element is conducted in the secure and trustful onboarding infrastructure. The advantage of provisioning VCs after instantiation is that VC issuing components are reachable by the network element after the instantiation which might not have been reachable by the onboarding infrastructure before instantiation.

Option c) has the advantage that the resource-consuming task of DID creation is outsourced to the execution environment of the network element. Since the DID is not known before instantiation, the DID-bound VCs must be provisioned after the DID is created by the network element.

In detail, the VDR (verifiable data registry) is a hardware or software entity that can run on a single or across multiple network entities like server entities. The different VDRs can be distributed over different networks belonging to different network operators. The VDR is configured to store DID documents of the network elements. Changes of DID documents 210 can be verified and fully synchronized among all VDR instances of the same VDR.

The DID document 210 of the network elements - as resolvable via their DIDs - are persisted and shared via the VDR, which is a trusted entity. With peer DIDs, the DID document 210 can be resolved from the DID itself. The VDR is a trusted entity of the network operators involved, in particular the VDR can be run by governmental authority or by the network operators themselves. The VDR acts as a trust anchor because changes to DID documents 210 are verified by the VDR or by the stakeholder operating the VDR. In other words, the VDR guarantees that only the network element or the network operator related to this network element to which the DID 215 belongs to can modify this DID document 210 inside the VDR, wherein further network elements can only read the DID document 210 and verify the authenticity of those modifications. Whoever owns the key pair of the DID can make any changes to the DID document in the VDR. Ultimately, however, the governance of the VDR, i.e. how the stakeholders envision the joint management of the VDR, determines whether a DID owner is authorized to make changes in the VDR at all. VCs/VPs are never in the VDR. The VDR can be realized in different technical forms, ranging from a database that is centrally operated by a single stakeholder to distributed ledger that is operated in a decentralized way by multiple stakeholders, wherein the stakeholders can in particular be the network operators. A decision how to realize a concrete embodiment of the VDR can depend on the government's antitrust requirements within a particular SSI application scenario.

Next, a DID management function (DMF) is being described that can be part of the invention. The DMF is a logical network component, which can be a hardware or software component in the realization. It has however in common with the VDR. It uses the VDR only to store DID documents of public DIDs.

The DMF can provide a functionality that manages the DIDs of a network. Depending on the used option a) to c) described above within the context of DID creation, the DMF provides the following corresponding tasks:
a) i) the DMF can create the DID document 210 (comprising the DID and/or public and the private key); ii) the DMF can store a DID document and the underlying key pair, wherein this information can be used for the re-creation of the network element, in particular in case of network element's failure; iii) the DMF can comprise the secure storage to safely store the DID document and underlying key pair; and/or iv) the DMF can provide the DID document to the VDR, wherein the DMF can be the only entity that is being allowed to provide new DID documents 210 to the VDR.
b) i) the DMF can create the DID document 210 (comprising the DID and/or public and the private key); ii) the DMF can store a DID document and the underlying key pair, wherein this information can be used for the re-creation ofthe network element, in particular in case of the network element's failure; iii) the DMF can comprise the secure storage to safely store the DID document and underlying key pair; and/or iv) the DMF can provide the DID document to the VDR, wherein the DMF can be the only entity that is being allowed to provide new DID documents 210 to the VDR.
c) i) the DID document 210 can be created by the network element 200 itself (comprising the DID document and public and/or the private key), wherein the network element 200 can provide the DID document and the key pair for potential re-creation to the DMF (for future use); ii) the DMF can store the DID document and key pair for potential disaster recovery; iii) the DMF comprises a secure storage to safely store the DID document and key pair, and/or iv) the DMF provides the DID document 210 into the VDR. The DMF is the only component, that is allowed to provide the DID document 210 to the VDR..

Next, a wallet repository is being described, that can be part of the invention. The wallet repository and provides different kinds of software packets. An orchestrator can combine a software of the network element and/or the network function accordingly by using the different software packets of the wallet repository when setting up the network element and/or the network function.

Next, an automated creation of the VCs and their assignment is being described that can be part of the invention.

DID-bound verifiable credentials (VC) can be used within the context of the invention to provide the basis for proving authenticity in order that the network element can be sure that it is the one that it claims to be and for management of authorizations that is that the network element is allowed to communicate with specific further network elements. The VC that are exchanged between communicating network elements can be assigned by the VC issuing components that can be implemented on the issuer 105 as described below. In some embodiments, the VCs may also be used for authentication only and authorization can be done in a different way.

The invention can make use of a SSI-root (SSI-R) entity. In principle, the SSI-root and can be implemented as software on a server or can be a standalone computing entity. The functionality and the characteristics of the SSI-root can be described as follows:
- the SSI-root represents the highest (technical) trusted authority within the network, in particular within the network of network operator or the network owner. The SSI-root is configured to hold a DID (operator-DID);
- the SSI-root provides the highest level of trust within one network or over different networks;
- the functionality of the SSI-root can be to be the issuer of verifiable identity attributes and verifiable authorizations to SSI managers (SSI-M);
- the SSI-root can delegate to the SSI-Ms the right to issue VCs for authentication and authorization purposes;
- the SSI-root can delegate to the SSI-Ms the right to subdelegate to other SSI-Ms the right to issue VCs for authentication and authorization purposes
- the SSI-root can be configured to issue and revoke delegated rights to SSI-Ms or any network elements to issue and revoke VCs for authentication and authorization purposes;
- the SSI-root can be configured to hold a list of externally trusted further SSI-Rs and can be configured to receive that information;
- the SSI-root is configured to show the highest level of protection in order to keep the SSI-root as being the highest trust entity as secured as possible; the SSI-root is being configured and/or located within the network so that it is not reachable from outside the network, which means that it can be operated without direct interfaces to external components;

The invention can make use of the SSI-Manager (SSI-M) entity. In principle, the SSI-M can be implemented as software on a server or can be a standalone computing entity. The functionality and the characteristics of the SSI-M can be described as follows:
- the SSI-M can have the functionality of being an issuer of verifiable identity attributes and verifiable authorizations to network elements and/or network functions;
- the SSI-M can have rights to issue and revoke verifiable identity attributes and verifiable authorizations for network elements and/or network functions belonging to the network;
- the SSI-M can have rights to issue and revoke verifiable identity attributes and verifiable authorizations external network elements and/or external network functions;
- the SSI-M can have the right to subdelegate the rights to issue and revoke verifiable identity attributes and verifiable authorizations network elements and/or network functions belonging to the network to other SSI-Ms;
- the SSI-M can have the right to subdelegate the rights to issue and revoke verifiable identity attributes and verifiable authorizations for external network elements and/or external network functions to other SSI-Ms;
- the SSI-M is being configured that its dedicated rights can be revoked by the SSI-R and/or other SSI-M if the SSI-M gets compromised;
- the SSI-M can hold the list of externally trusted SSI-Rs or is being configured to access this information;

In principle, there can be more than one level of hierarchy of SSI-Ms within one network depending on the design and the size of the network. The delegation of the rights and the task to issue verifiable identity attributes and verifiable authorizations to network elements from the SSI-R to the SSI-M can have the effect of load-balancing so that not all network elements communicate with the SSI-R and it has the technical effect of enhancing security for the SSI-R because external network element and/or network functions do not communicated directly with the SSI-R. Another advantage of the hierarchy is that the organizational structure of the network owner, with hierarchically structured departments that have specific rights and duties, can be reflected in the hierarchy.

The hierarchy of the VC issuers can be designed as needed based on the design and the size of the network. Hence, and there are several options:
No hierarchy: in case that the SSI-R is the only entity that is allowed to issue VCs, the SSI-R has no specific security isolation from other network elements so that it can directly communicate with those network elements that shall be implemented in the network environment;

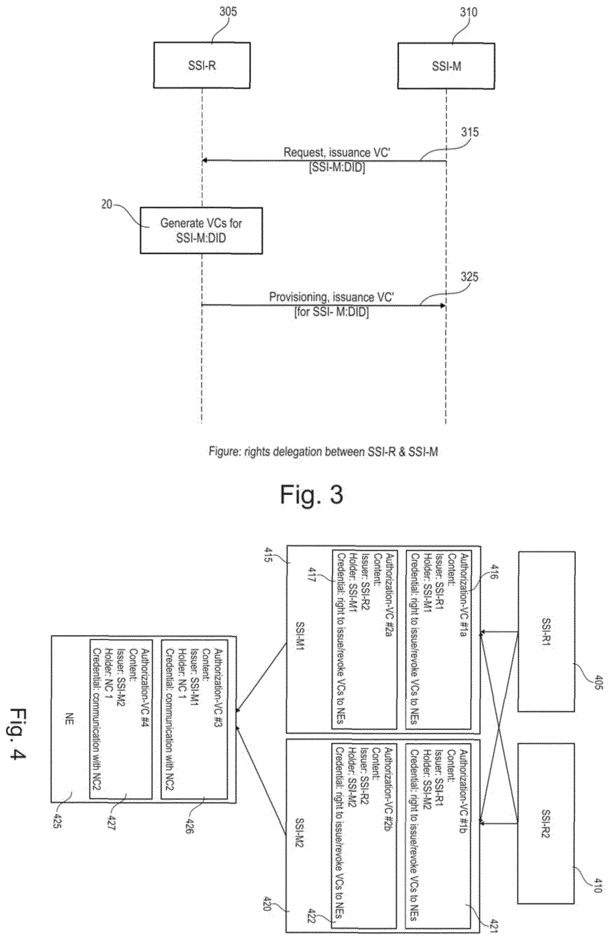

Two level hierarchy: at least one SSI-M is being implemented within the network. The SSI-R delegates the rights to issue and revoke VCs to the at least one SSI-M. This allows that the SSI-R only connects to a limited number of well-defined network entities, namely the SSI-Ms. Possible SSI-R interfaces to other authorization elements outside of its own network may be secured by deploying the SSI-M as a kind of proxy to protect the SSI-R by isolation. The concept is being illustrated in Fig. 3.

Multi level hierarchy: more than one level of SSI-Ms can be implemented, wherein higher level SSI-Ms can delegate their tasks to lower-level SSI-Ms. This scenario may be beneficial for very large networks with regionally restricted functionality and tasks.

Multi-issuer delegation: depending on the use case, the delegation of the rights to a SSI-M or the issued VCs for a network element are only valid if the delegations for the SSI-M or the VCs of the network element are provided by two or more SSI-Rs for SSI-M or two or more SSI-Ms for a network element. That means that two or more different SSI-Rs needs to prove that a certain SSI-M is authorized to execute a certain task or conventionally that two or more different SSI-Ms are necessary to prove that the network element is authorized to execute a certain task or request. A digital identity of a network element can also only be complete and thus serve authentication if it has received two VCs from two SSI-Ms. The content of the two VCs can be unequal (i.e., one provides the name, the other the owner) or equal (i.e., two SSI-Ms certify to the network element that it belongs to a particular network operator).

Fig. 3 shows the relationship between a SSI-R 305 and a SSI-M 310. The SSI-M 310 and the SSI-R 305 have a common and communication interface. In step 315, the SSI-M 310 performs an "Issuance VC" request to the SSI-R 305. In addition the SSI-M 310 provides its SSI-M:DID to the SSI-R 305. In step 320, the SSI-R 305 generates VCs for the SSI-M:DID. In step 325, the SSI-R 305 performs "provisioning 'issuance VC'" for SSI-M:DID towards the SSI-M 310.

Fig. 4 shows the principles of multi-issuer delegation within the same network. Fig. 4 shows a first SSI-R 405, a second SSI-R 410, a first SSI-M 415, a second SSI-M 420, a network element 425. The first SSI-M 415 receives a first authorization VC 416 from the first SSI-R 405 with the credentials to have the right to issue and revoke VC to NEs, and the first SSI-M 415 receives a second authorization VC 417 from the second SSI-R 410 with the credentials to have the right to issue and revoke VC to NEs. Hence, the SSI-M 415 has received its tasks, functionality by two different SSI-Rs 405, 410. The second SSI-M 420 receives a first authorization VC 421 from the first SSI-R 405 with the credentials to have the right to issue and revoke VC to NEs, and the second SSI-M 420 receives a second authorization VC 421 from the second SSI-R 410 with the credentials to have the right to issue and revoke VC to NEs. Hence, the SSI-M 420 has received its tasks, functionality by two different SSI-Rs 405, 410. In a similar way, the network element 425 receives a first authorization VC 426 from the first SSI-M 415 and receives a second authorization VC 427 from the second SSI-M 427.

Multi-issuer delegation can become important in cases that two network operators interact with each other. If successful automated implementation of the network element 425 requires approval, authorization from two different instances (like the two different SSI-Rs) this enhances security and trustworthiness. This can also be described as a multi-stakeholder scenario and can comprise the use case that an application is being instantiated by the company owning the first SSI-R 405 in the network of the second company. The implicit trust between the two issuer chains can be pre-requisite and can be applied by reflecting entries of the SSI-Rs and/or SSI-Ms in the VDR as a Trusted Issuer Registry.

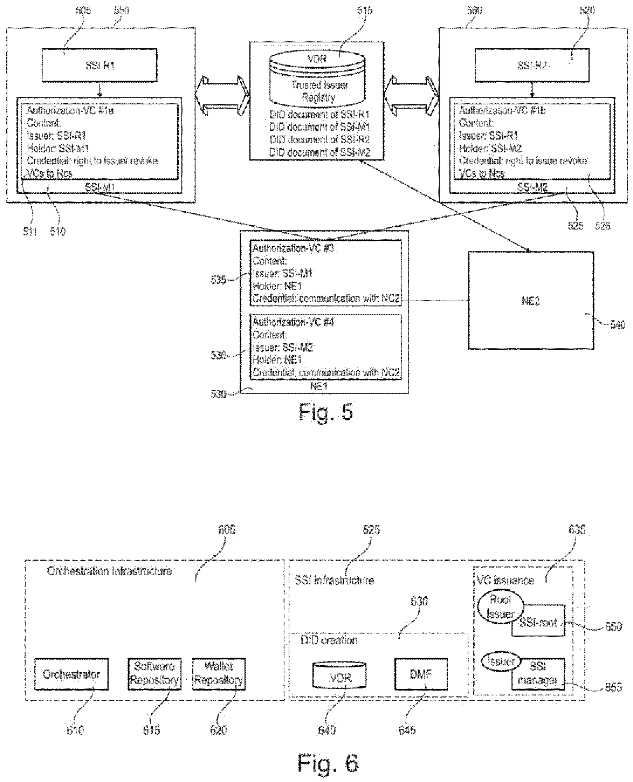

Fig. 5 shows the principles of multi-issuer delegation within different networks.

A first SSI-R 505 belongs to a first network and provides a first SSI-M 510 that also belongs to the first network with authorization VC 511. The SSI-R 505 can also be allowed to write its DID document and the DID document of the first SSI-M 510 into a VDR database 515.

A second SSI-R 520 belongs to a second network and provides a second SSI-M 525 that also belongs to the second network with authorization VC 526. The SSI-R 520 can also be allowed to write its DID document and the DID document of the second SSI-M 525 into the VDR database 515.

The first SSI-M 510 and the second SSI-M 525 can each provide a network element 530 with respective authorization VCs 535, 536. If the network element 530 shall be instantiated within one of the networks and shall communicate with a further network element 540, the network element 530 can prove its identity and authorization by showing its trusted elements, which are the respective authorization VCs 535, 536, to the further network element 540. The figures describe Authorization VCs, but these can of course also be Authentication VCs. In the sense, the identity of an SD results from identity attributes that are attested by different stakeholders. The further network element 540 can then access the DID documents of all the involved SSI-Rs and SSI-M in the VDR to check if the VCs are valid.

The trusted issuer registry can be a special form of a VDR that is used when several stakeholders are involved. Hence, the 'Trust Issuer' in the name, because it must be ensured that only trusted partners are allowed to write or change this registry (= write/change DIDs). A governance structure of the entity can then reflect this accordingly - via contracts and in the technical implementation. A VDR is only required if a DID is a public DID. This means a DID for which the DID documents must be stored in a VDR. DID documents of public DIDs can therefore still be changed afterwards in the VDR. DID documents of private (peer) DIDs can no longer be changed because they are interwoven with the DID. If something changes, the DID also changes. For SSI-Ms and SSI-Rs, public DIDs make much more sense than for network elements, since SSI-Ms and SSI-Rs are more durable and, for security reasons, there should be regular key rotation in the DID document.

A further principle that can be used by the invention is identity attribute and authorization (both claims) revocation respectively VC revocation: In case a given VC needs to be revoked, a revocation-database can be used that holds all VCs and/or references to the VCs that either ran out of time or have been actively revoked because of some kind of incident. Granted VCs of network elements can be checked on a regular basis if they were subject of revocation. VCs may be subject of verification based on regular time periods like every ten seconds or every 5 minutes or so. Or the verification decision logic may be based on the number of processed requests.

If VCs are still living within their limited validity period and get revoked, they will still be verified by a verifier as technically valid. It is, in addition, the responsibility of the verifier to check for the VC revocation status at the entity where the revocation of VCs is communicated. Otherwise, the verifier will verify a revoked VC as technically valid although being revoked.

In the following, the overall SSI architecture and/or combined procedures that can be used within the context of the invention shall be explained:
Fig. 6 gives an overview over components that can be used within a SSI infrastructure for the instantiation process.

Fig. 6 shows an orchestration infrastructure part 605 comprising an orchestrator 610, a software repository 615 and a wallet repository 620. The orchestrator 610 is the overall head of lifecycle management (LCM) of network elements in the cloud environment. The orchestrator 610 operates with a makes all necessary decisions for the instantiation process like the location, the NE will be implemented, the scaling and the following LCM. The software repository 615 holds artifacts and software packages for instantiating a certain network element. Optionally, software packages of network elements can already include a wallet software. In that case, the wallet repository shown in Fig. 6 is not necessary. The wallet repository 620 holds wallet software that is needed for the network element to store the keys and the VCs securely. The wallet software may be different for different software packages and may vary depending on the actual business logic of the network element.

Fig. 6 also shows a SSI infrastructure part 625 that comprises a DID creation part 630 and a VC issuance part 635. The DID creation part 630 comprises a VDR 640 and a DMF 645. The VC issuance part 635 comprises a SSI-R 650 and a SSI-M 655. The VDR 640 stores all DID documents. The DMF 645 manages the DID document on behalf of the network element in options a) and b) as described below. The DMF 645 is the only instance who has the right to store DID documents in the VDR. The NEs could also update their own DID documents in the VDR. The fact that the DMF and/or the NEs can do this depends on the governance of the VDR. Technically, they can, since both have the key pair of an NE's DID. No special configuration is required. If a DID document is to be updated, then the new version of the DID document must be digitally signed with the private key of the key pair. The whole one sends (DMF or NE) to the VDR. This checks the correctness of the digital signature with the public key, which is in the old version of the DID document from the VDR. If this fits, all VDR instances are brought on the newest conditions.

The SSI-R 650 manages the authorization for the SSI-Ms 655 and the SSI-Ms 655 manages the authorization for further SSI-Ms and the SSI-Ms 655 manages the VCs for network elements, network functions and/or application servers.

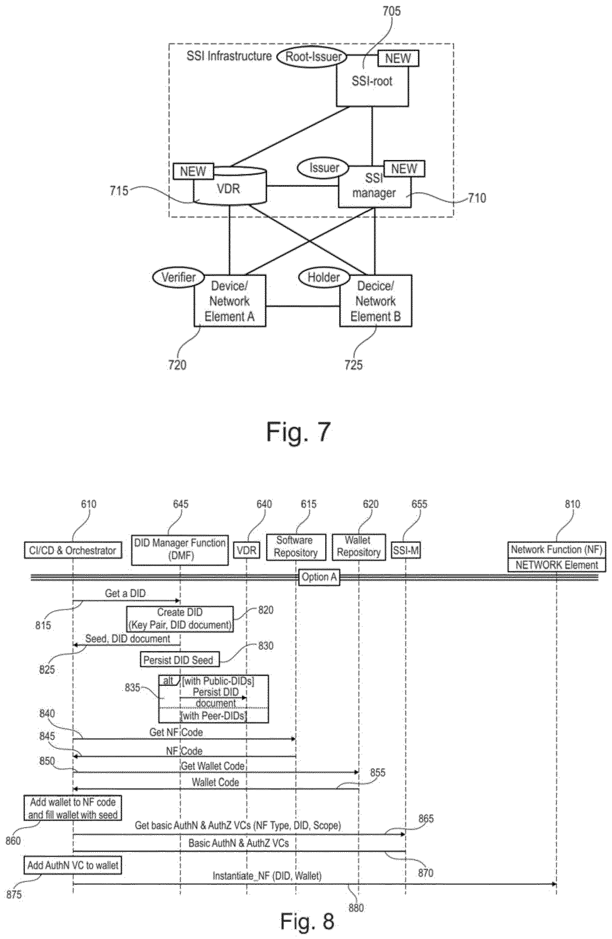

Fig. 7 gives an overview of the SSI infrastructure and shows how the various entities communicate with each other.

A SSI-R 705, as the root-issuer, can communicate with a SSI-Ms 710 to enable the SSI-Ms 710 to provide VCs to network elements and the SSI-R 705 can communicate with a VDR 715 to provide DID documents to the VDR 715. The SSI-Ms 710 can also communicate with the VDR 715 to provide DID documents to the VDR 715. The SSI-Ms 710 can also communicate with a first network element 720 and the second network element 725 and provide respective VCs to the network element 720, 725. The first network element 720 and the second network element 725 can authorize, related and/or authenticate each other by showing each other the respective trust element and verifying the trust elements by communicating with the VDR 715.

Fig. 8 shows an inventive communication system configured to execute the inventive method. The communication system can comprise an orchestrator 610, an DMF 645, an VDR 640, a software repository 615, a wallet repository 620, an SSI-M 655, an SSI-R 650, a network element 810, and/or servers that provide the computing power for the respective functionalities and/or communication links.

Fig. 8 shows an onboarding procedure of the new network element and/or network function within the SSI infrastructure according to an option a). The key features of option a) are that
- DIDs are created by the DMF before the instantiation of the NE in the orchestration infrastructure 605 and are provided to the network element before during instantiation;
- either a peer DID is created by the DMF with no DID document or a public DID with a DID document in the VDR;
   ∘ the following explains details about the DID that can be applied to all embodiments of the invention: the difference between with a public DID, the DID document is stored in a VDR. This makes the VDR the trusted entity that makes sure there is only one valid DID document associated with a DID. With the public DID of a DID owner, strangers can access the one and only DID document of the public DID owner in the VDR and can thus verify the DID ownership proof provided by the DID owner for authentication purposes. With a peer DID, there is no DID document and therefore no VDR. All the public key material needed for the peer DID owner to proof ownership of the peer DID is already included in the DID itself, respectively in the identifier. So if a stranger gets a peer DID - so only the identifier - from the DID owner, that stranger extracts the public key material from the identifier and is then able to challenge the DID owner to proof ownership. With peer DIDs, the link between the public key material (DID document) and the DID is done by interweaving the key material with the identifier instead of using a VDR to take care of this link.
- the orchestrator is the overall controller of the NE onboarding/instantiation process; The orchestrator knows which network element and/or network functions and shall be implemented to provide certain functionality of the communication system. Hence it is a sensible choice that the orchestrator controls the overall process;
- VCs are requested from the SSI-M before the instantiation and provided to the network element during the instantiation;
- the onboarding controller (orchestrator) combines the business logic software, the wallet, the **DID** and the VCs to one software package for the instantiation process;

**In** detail:
**In** step 815 the orchestrator 610 requests a **DID** for a network element 810 towards the **DMF** 645;
**In** step 820, the **DMF** 645 creates the **DID** that comprises the key pair of the public and the private key, and the **DID** document;
In step 825, the DMF 645 sends the key pair and/or the DID document back to the orchestrator 610;
In step 830, the DMF 645 performs the step "persist DID document and key pair seed";
In step 835, the DMF 645 stores the DID document in the VDR 640 if it is a public DID or does nothing in case it is a peer DID;
In step 840, the orchestrator 610 requests a code of the network function 810 and/or of the network element 810 from the software repository 615, wherein in step 845, the software repository 615 sends the code back to the orchestrator 610;
In step 850, the orchestrator 610 requests the wallet code from the wallet repository 620, wherein in step 855, the wallet repository 620 sends the wallet code back to the orchestrator 610;
In step 860, the orchestrator 610 adds the wallet to the code of the network function and fills the wallet with the DID document and the key pair;
In step 865, the orchestrator 610 requests basic authentication and authorization VCs optionally together with the from the SSI-M 655, wherein in step 870 the SSI-M 655 sends the basic authentication and authorization VCs back to the orchestrator 610; The scope is e.g. the area in which e.g. VCs can be valid, e.g. a certain slice, or campus environment;
In step 875, the orchestrator 610 adds the authentication and/or the authorization to the wallet, which can allow the network element to contact the SSI-M for further VCs after successful instantiation;
In step 880, the network function 810 or the network element 810 is being instantiated, wherein the DID is also assigned to the network function 810 or the network element 810, in particular by using the wallet; the DID comprises the key pair and the DID document;
The instantiated network function 810 or the network element 810 is now being able to identify and/or authorize itself towards other network components when it is implemented in an automated way into a network environment.

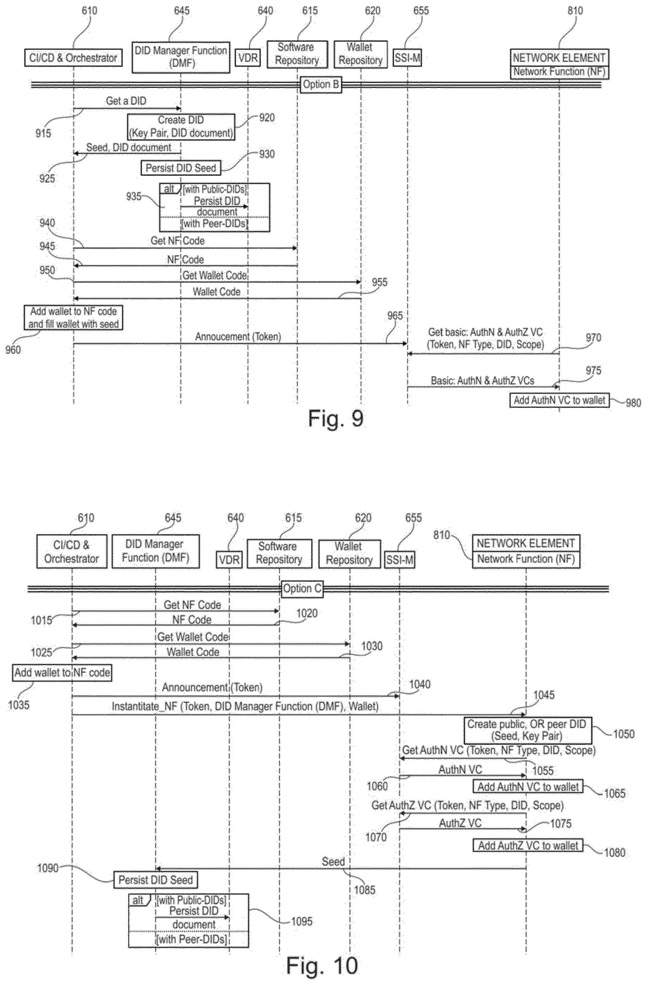

Fig. 9 shows an onboarding procedure of the new network element and/or network function within the SSI infrastructure according to an option b). The key features of option b) are that
- the DIDs are created by the DMF before the instantiation of the NE in the orchestration infrastructure 605 and provided to the network element and/or the network function during instantiation;
- either a peer DID is created by the DMF with no did document (in the VDR) or a public DID with a DID document in the VDR;
- the orchestrator is the overall controller of the process;
- VCs are requested after the instantiation process has finished from the network element and/or the network function from the SSI-M;
- to ensure that only permitted network elements and/or network functions are requesting VCs at the SSI-M, and because authentication and/or authorization VCs have not yet been provided to the network element and/or a network function, and authorization token can be issued to the network element and/or the network function and to the SSI-M. The SSI-M receives an announcement including the token and the DID of the network element and/or the network function. Only if the DID and the token in the request of the network function and/or the network element and the appropriate DID and token stored within the SSI-M match, the SSI-M will provide corresponding VCs.

In detail:
In step 915 the orchestrator 610 requests a DID for the network element 810 from the DMF 645;
In step 920, the DMF 645 creates the DID that comprises the key pair of the public and the private key, and the DID document;
In step 925, the DMF 645 sends the key pair and/or the DID document back to the orchestrator 610;
In step 930, the DMF 645 performs the step "persist DID document and key pair ";
In step 935, the DMF 645 stores the DID document in the VDR 640 if it is a public DID or does nothing in case it is a peer DID;
In step 940, the orchestrator 610 requests a code of the network function 810 and/or of the network element 810 from the software repository 615, wherein in step 945, the software repository 615 sends the code back to the orchestrator 610;
In step 950, the orchestrator 610 requests the wallet code from the wallet repository 620, wherein in step 955, the wallet repository 620 sends the wallet code back to the orchestrator 610;
In step 960, the orchestrator 610 adds the wallet to the code of the network element 810 and fills the wallet with the DID document and the key pair;
In step 965, the orchestrator 610 sends an announcement as a token to the SSI-M 655;
In the drawing, the Instantiate_NF arrow between the Orchestrator 610 to 810 is not shown. Nevertheless, in this step the NE 810 is given the DID or the DID document, the token and the wallet. This happens between steps 965 and 970. Of course, the NE must be instantiated before it becomes active.

In step 970, the network element 810 and/or the network function 810 requests basic authentication and authorization VCs from the SSI-M 655, wherein the request comprises the token, NF-type, DID, and/or the scope;
In step 975, the SSI-M 655 sends the requested basic authentication and/or authorization VCs back to the network element 810 and/or the network function 810;
In step 980, the network function 810 and/or the network element 810 adds the VC to the wallet;
Fig. 10 shows an onboarding procedure of the new network element and/or network function within the SSI infrastructure according to an option c); The key elements of option c) are:
   - the DIDs are created by the network element and/or the network function after instantiation;
   - the network element and/or the network function creates a peer DID (with no DID document in the VDR) or a public DID (with a DID document in the VDR). However, if the public DID is used then the DMF visits the DID document in the VDR;
   - the DMF acts as a management instance for the DID documents and key pairs and stores DID document of public DIDs in the VDR;
   - VCs are requested by the network element and/or the network function after the instantiation;
   - VCs are requested after the instantiation process is finished by the network element and/or the network function from the SSI-M;
   - to ensure that only permitted network elements are requesting VCs at the SSI-M - and because authorization VCs have not yet been provided to the network element and/or a network function - an authorization token is issued to the network element and/or the network function and also to the SSI-M. The SSI-M receives an announcement including the token and the DID of the network element and/or the network function. Only if the DID and the token in the request of the network function and/or the network element and the appropriate DID and token stored within the SSI-M match, the SSI-M will provide corresponding VCs; it is possible that the token comprises the DID;
   - the orchestrator is the overall controller of the process;
   in detail:
   in step 1015 the orchestrator 610 requests network function code towards the software repository 615;
   in step 1020, the software repository 615 sends the requested network function code back to the orchestrator 610;
   in step 1025, the orchestrator 610 requests the wallet code towards the wallet repository 620;
   in step 1030, the wallet repository 620 sends the wallet code back to the orchestrator 610;
   in step 1035, the orchestrator 610 adds the wallet code to the network function code;
   in step 1040, the orchestrator 610 sends an announcement as a token to the SSI-M 655;
   in step 1045, the orchestrator instantiates the network function 810 or the network element by using the token, a reference to the DMF 645 and the wallet;
   in step 1050, the network function 810 creates a key pair, the public DID with a DID document or the peer DID;
   in step 1055, the network function 810 requests an authentication VC by providing the token, the network function type and, the DID towards the SSI-M 655;
   in step 1060, the SSI-M 655 sends the authentication VC back to the network function 810 and/or the network element 810;
   in step 1065, the network element 810 and/or the network function adds the authentication VC to its wallet;
   in step 1070, the network function 810 requests an authorization VC by providing the token, the network function type, and the DID towards the SSI-M 655;
   in step 1075, the SSI-M 655 sends the authorization VC back to the network function 810 and/or the network element 810;
   in step 1080, the network element 810 and/or the network function 810 adds the authentication VC to its wallet;
   in step 1085, the network function 810 and/or the network element, sends the DID document and the key pair to the DMF 645;
   in step 1090, the DMF 645 performs "persist document and key pair";
   In step 1095, the DMF 645 stores the DID document in the VDR 640 if it is a public DID or does nothing in case it is a peer DID;
   A further aspect of the invention is an inter-operator scenario, wherein the inter-operators can be two different network operators.

In principle, the same technical principles apply if a network element and/or a network function shall be instantiated by a first network operator in the network environment, in particular the cloud infrastructure, of the second network operator. In this case, the tasks of the CI/CD (Continuous Integration/Continuous Delivery) infrastructure can be split up into two different parts, wherein the first part is performed by a controlling infrastructure and the second part can be done by the executing CI/CD infrastructure.

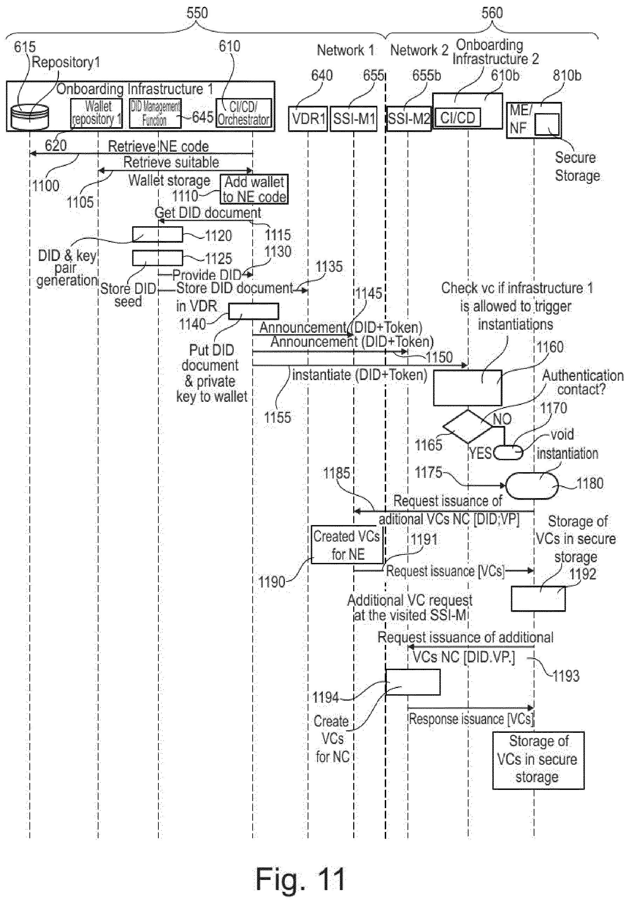

Functionalities of the controlling infrastructure comprises: version control and CI/CD management, continuous integration, continuous deployment and orchestration, and/or configuration management;
Functionalities of the executing infrastructure comprises: infrastructure provisioning, containerization and hosting, database and storage provisioning, automated scaling and monitoring, and/or orchestration;
The intra-operator scenario shows the following properties, which are different to the single operator use case described before:
   - compared to option a) of Fig. 8: the VCs of the network element will be provided to a network element and/or a network function by an SSI-M of the first network operator, for example a home network, and by an SSI-M of the second network operator, for example a visiting network; the VCs of the SSI-M of the first network can be provided before the instantiation and the SSI-M of the second network can be provided after instantiation. In Fig. 11, the NE is first instantiated and then receives its VCs from the SSI-M1 from the home network. With the VCs from the home network, the NE then goes to the SSI-M2 from the visiting network and also receives VCs issued from there. It is a prerequisite that a prior authentication and/or authorization based on the DID-bound VCs has been successfully performed between acting orchestrator elements of the first operator and orchestrator elements of the second operator. It can ensure to only provide network resources of the second operator to other operators which are entitled to trigger instantiation in the second operator's network;
   - Compared to option b) of Fig. 9 and to option c) of Fig. 10: the network element and/or the network function first requests the necessary VCs at the SSI-M of the first network operator, in particular the home network operator, and then at the SSI-M of the second network operator, in particular the visited network. The VCs of the first network operator are used for authentication and/or authorization towards the SSI-M of the visited network;
   - the tasks are split between the controlling and that the executing environment;
   - optionally: storage of service end points of the NE within the DID document; ;

Option a) can be considered as more reliable and secure compared to b) and c) for the inter-operator scenario, as the network element/function is instantiated in a different environment. The number of different fraud scenarios increases as the onboarding environment is not under control of the home operator.

The relationship of the first network operator and the second network operator according to the inter-operators scenario can be illustrated by Fig. 5, wherein the SSI-R 505 and the SSI-M 510 is associated to the first network operator 550 and the SSI-R 520 and the SSI-M 525 is associated to the second network operator 560.

An exemplary use case is to apply those principles to a mobile network deployment in a cloud environment that can support service and network Federation, for example by instantiating services based outside the own network environment of the first network operator, for example within the network of the second network operator. The second network operator can also be described as being a foreign network operator with its foreign network infrastructure;
Fig. 11 shows an example of option a) of Fig. 8 for the use case of an inter-operator scenario. Options b) and c) can also be applied to the inter - operator scenario accordingly.

In detail:
in step 1100, the orchestrator 610 of the first network operator 550 retrieves a code of the network element 810b and/or the network function 810b from the software repository 615 of the first network operator 550;
in step 1105, the orchestra 610 of the first network operator 550 retrieves a suitable wallet storage from the wallet repository 620 of the first network operator 550,
in step 1110, the orchestrator 610 adds the wallet to the code of the network function 810b and/or the network element 810b;
in step 1115, the orchestrator 610 requests the DID document from the DMF 645 of the first network operator 550;
in step 1120, the DID (peer DID) or DID document (public DID) and the key pair is generated by the DMF 645;
in step 1125, the DID (peer DID) or DID document (public DID) and the key pair is stored within the DMF 645;
in step 1130, the DID(peer DID) or DID document (public DID) and key pair is provided to the orchestrator 610;
in step 1135, the DID document is stored in the VDR 640 of the first network operator 550 in case of a public DID;
in step 1140, the orchestrator 610 puts the DID (peer DID) or DID document (public DID) and the private key into the wallet;
in step 1145, the orchestrator 610 sends an announcement comprising the DID and a token to the SSI-M 655 of the first network operator 550; and in optional step 1150, the orchestrator 610 sends the announcement comprising the DID and the token to the SSI-M 655b of the second network operator 560;
in step 1155, an instantiation request comprising the DID and the token and a VC of the first network operator 550 is sent to the orchestrator 610b of the second network operator 560; the instantiation request includes - as in option b) above - the code and the wallet;
In step 1160, the orchestrator 610b performs a check of the VC if the infrastructure is allowed to trigger an instantiations of network functions and/or network elements from the first network operator 550;
in step 1165, the orchestrator 610b checks if the authorization is correct and goes to "void" in step 1170 if authorization is not correct or proceeds otherwise with the instantiation by triggering step 1175 in which the orchestrator 610b initiates the instantiation and wherein in step 1180, the network function 810b is instantiated on the network element;
in step 1185, the network element 810b and/or the network function 810b sends a request to issue a first VC for the network element and/or the network function 810b comprising the DID and the token to the SSI-M 655 of the first network operator 550;
in step 1190, the SSI-M 655 of the first network operator 550 creates the VC for the network element 810b;
in step 1191, the SSI-M 655 of the first network operator 550 sends the response comprising the VC back to the network element 810b;
in step 1192, the network element 810b stores the VC in the wallet;
It is possible to further perform the following steps in the inter-operators scenario:
   in step 1193, the network element 810b and/or the network function 810b sends a request to issue a second VC of the network element and/or the network function 810b comprising the DID and the VC to the SSI-M 655b of the second network operator 560;
   in step 1194, the SSI-M 655b of the second network operator 560 creates the VC for the network element 810b;
   in step 1195, the SSI-M 655b of the second network operator 560 sends the response comprising the VC back to the network element 810b;
   in step 1196, the network element 810b stores the VC in the wallet;
   In principle, in the Fig. 8 to 11, the SSI-M could be replaced by a SSI-R as the SSI-R is capable to fulfill all tasks of the SSI-M.

## Claims

1. A method to enable implementation within a network infrastructure of a network operator (550, 560) comprising the following steps:
• providing and/or creating a Decentralised Identifier "DID", a private key, a public key and verifiable credentials "VC" for the network element (200, 425, 530, 810);
• binding the VC to the DID resulting in a DID-bound VC (205) and add a digital signature of an issuer to the DID-bound VC (205);
• providing the DID-bound VC and the private key to the network element (200, 425, 530, 810).

2. The method of claim 1, wherein the network element (200, 425, 530, 810) is provided as a hardware realization and/or as a software realization for the implementation process of the network operator (550, 560), wherein the software realization of the network element is instantiated by the network operator (550, 560) or by another network operator (550, 560) by creating a software component comprising the DID-bound VC (205).

3. The method of claim 2, wherein the instantiation process is performed before the implementation process.

4. The method of claims 2 to 3, wherein the software component is combined, in particular by an orchestrator of the network operator (550, 560), with a wallet software to allow secure storage of credentials.

5. The method of any of the claims, wherein the DID, the private key, and/or the public key is created by the network element and/or by a DID manager function "DMF" (645).

6. The method of any of the claims, wherein the creation of the DID-bound VC (205) is performed by at least one trusted issuer manager element (415, 420, 510, 525, 655) - called a "SSI-M" (415, 420, 510, 525, 655) - and/or by a trusted issuer root element (405, 410, 505, 520) - called a "SSI-R" (405, 410, 505, 520) - of a first network operator (550) and/or of a second network operator (560).

7. The method of claim 6, wherein the SSI-R (405, 410, 505, 520) is the highest trust authority within the network of the first network operator (550) or of the second network operator (560), wherein the SSI-R (405, 410, 505, 520) issues the right to the at least one SSI-M (415, 420, 510, 525, 655) to create the VCs and to bind the VC to the DID resulting in the DID-bound VC for the network element.

8. The method of claims 6 to 7, wherein the SSI-R (405, 410, 505, 520) holds an operator-DID of the first network operator or the second network operator, wherein the operator-DID is additionally stored within the DID-bound VC (205).

9. The method of the claims 1 or 6 to 8, wherein the SSI-R (405, 410, 505, 520), one of the SSI-M (415, 420, 510, 525, 655) or a DID manager function "DMF" (645) stores the DID of the network element, the DID of the SSI-R and/or the DID of the SSI-M in a trusted VDR database (515, 640).

10. The method of any of the claims, wherein the network element (200, 425, 530, 810) provides its DID-bound VC (205) in the implementation process to a second network element (540) and/or the SSI-M to authenticate and/or authorize itself, wherein the second network element (540) is also provided with the public key of the network element (200, 425, 530, 810), wherein the second network element (540) is operated by the first network operator (550) or a second network operator (560).

11. The method of claim 10, wherein the second network element (540) and/or the SSI-M (415, 420, 510, 525, 655) verifies a signature of the DID-bound VC (205), and wherein the network element (200, 425, 530, 810) is authenticated and/or authorized if the signature of the DID-bound VC (205) is valid.

12. Network element for implementation in a network infrastructure of a network operator, wherein the network element (200, 425, 530, 810) comprises a Decentralised Identifier-bound verifiable credential, DID-bound VC, (205), with a digital signature of an issuer and a private key, wherein the network element (200, 425, 530, 810) is configured to authenticate and/or authorize itself by sending its DID-bound VC to a further network element (540).

13. A trusted issuer root manager - called a "SSI-M" (415, 420, 510, 525, 655) - of a network operator (550, 560), wherein the "SSI-M" (415, 420, 510, 525, 655) manages to provide a Decentralised Identifier-bound verifiable credentials, DID-bound VCs (205), to network elements of the network of the network operator (550, 560) or to network elements of a second operator (560) and is configured
• to create a VC and to bind the VC to the DID resulting in the DID-bound VC (205) for the network element, to digital sign the DID-bound VC (205) and to provide the DID-bound VC (205) to the network element.

14. A trusted issuer root element - called a "SSI-R" (405, 410, 505, 520) - of a network operator (550, 560), wherein the "SSI-R" (405, 410, 505, 520) is the highest trust authority within the network of the network operator (550, 560) and is configured
• to create a verifiable credential, VC, and to bind the VC to a Decentralised Identifier, DID, resulting in a DID-bound VC (205) for the network element, to digitally sign the DID-bound VC (205) and to provide the signed DID-bound VC (205) to the network element;
• to create a digital signature;
• to store and/or provide an operator-DID; and/or
• to issue the right to the SSI-M (415, 420, 510, 525, 655) of claim 13 to create the VCs and to bind the VC to the DID resulting in the DID-bound VC for the network element.

15. A communication system configured to execute the method according to any of the claims 1 to 11.

## Patentansprüche

1. Verfahren zum Ermöglichen einer Implementierung in einer Netzwerkinfrastruktur eines Netzwerkbetreibers (550, 560), umfassend die folgenden Schritte:
- Bereitstellen und/oder Erstellen einer Dezentralisierten Kennung "DID", eines privaten Schlüssels, eines öffentlichen Schlüssels und verifizierbarer Anmeldeinformationen "VC" für das Netzwerkelement (200, 425, 530, 810);
- Binden der VC an die DID, wodurch sich DID-gebundene VC (205) ergeben, und Hinzufügen einer digitalen Signatur eines Emittenten an die DID-gebundenen VC (205);
- Bereitstellen der DID-gebundenen VC und des privaten Schlüssels an das Netzwerkelement (200, 425, 530, 810).

2. Verfahren nach Anspruch 1, wobei das Netzwerkelement (200, 425, 530, 810) als Hardwarerealisierung und/oder als Softwarerealisierung für den Implementierungsprozess des Netzwerkbetreibers (550, 560) bereitgestellt ist, wobei die Softwarerealisierung des Netzwerkelements von dem Netzwerkbetreiber (550, 560) oder von einem anderen Netzwerkbetreiber (550, 560) instanziiert wird, indem eine Softwarekomponente erstellt wird, welche die DID-gebundenen VC (205) umfasst.

3. Verfahren nach Anspruch 2, wobei der Instanziierungsprozess vor dem Implementierungsprozess durchgeführt wird.

4. Verfahren nach Ansprüchen 2 bis 3, wobei die Softwarekomponente, insbesondere durch einen Orchestrator des Netzwerkbetreibers (550, 560), mit einer Brieftaschensoftware kombiniert wird, um eine sichere Speicherung von Anmeldeinformationen zu erlauben.

5. Verfahren nach einem der Ansprüche, wobei die DID, der private Schlüssel und/oder der öffentliche Schlüssel von dem Netzwerkelement und/oder von einer DID-Manager-Funktion "DMF" (645) erstellt werden.

6. Verfahren nach einem der Ansprüche, wobei die Erstellung der DID-gebundenen VC (205) von mindestens einem Manager-Element (415, 420, 510, 525, 655) eines vertrauenswürdigen Emittenten - "SSI-M" (415, 420, 510, 525, 655) genannt - und/oder durch ein Wurzelelement (405, 410, 505, 520) eines vertrauenswürdigen Emittenten - "SSI-R" (405, 410, 505, 520) genannt - eines ersten Netzwerkbetreibers (550) und/oder eines zweiten Netzwerkbetreibers (560) durchgeführt wird.

7. Verfahren nach Anspruch 6, wobei das SSI-R (405, 410, 505, 520) die höchste Vertrauensautorität innerhalb des Netzwerks des ersten Netzwerkbetreibers (550) oder des zweiten Netzwerkbetreibers (560) ist, wobei das SSI-R (405, 410, 505, 520) das Recht zum Erstellen der VC und zum Binden der VC an die DID, woraus sich die DID-gebundenen VC für das Netzwerkelement ergeben, an das mindestens eine SSI-M (415, 420, 510, 525, 655) erteilt.

8. Verfahren nach Ansprüchen 6 bis 7, wobei das SSI-R (405, 410, 505, 520) eine Betreiber-DID des ersten Netzwerkbetreibers oder des zweiten Netzwerkbetreibers hält, wobei die Betreiber-DID zusätzlich innerhalb der DID-gebundenen VC (205) gespeichert ist.

9. Verfahren nach den Ansprüchen 1 oder 6 bis 8, wobei das das SSI-R (405, 410, 505, 520), eines der SSI-M (415, 420, 510, 525, 655) oder eine DID-Manager-Funktion "DMF" (645) die DID des Netzwerkelements, die DID des SSI-R und/oder die DID des SSI-M in einer vertrauenswürdigen VDR-Datenbank (515, 640) speichert.

10. Verfahren nach einem der Ansprüche, wobei das Netzwerkelement (200, 425, 530, 810) seine DID-gebundenen VC (205) in dem Implementierungsprozess einem zweiten Netzwerkelement (540) und/oder dem SSM-M bereitstellt, um sich zu authentisieren und/oder zu autorisieren, wobei dem zweiten Netzwerkelement (540) auch der öffentlichen Schlüssel des Netzwerkelements (200, 425, 530, 810) bereitgestellt wird, wobei das zweite Netzwerkelement (540) von dem ersten Netzwerkbetreiber (550) oder einem zweiten Netzwerbetreiber (560) betrieben wird.

11. Verfahren nach Anspruch 10, wobei das zweite Netzwerkelement (540) und/oder das SSI-M (415, 420, 510, 525, 655) eine Signatur der DID-gebundenen VC (205) verifiziert, und wobei das Netzwerkelement (200, 425, 530, 810) authentisiert und/oder autorisiert wird, falls die Signatur der DID-gebundenen VC (205) gültig ist.

12. Netzwerkelement zur Implementierung in einer Netzwerkinfrastruktur eines Netzwerkbetreibers, wobei das Netzwerkelement (200, 425, 530, 810) an eine Dezentralisierte Kennung gebundene verifizierbare Anmeldeinformationen, DID-gebundene VC, (205) mit einer digitalen Signatur eines Ausstellers und einem privaten Schlüssel umfasst, wobei das Netzwerkelement (200, 425, 530, 810) dazu eingerichtet ist, sich durch Senden seiner DID-gebundenen VC an ein weiteres Netzwerkelement (540) zu authentisieren und/oder zu autorisieren.

13. Wurzelmanager eines vertrauenswürdigen Emittenten - "SSI-M" (415, 420, 510, 525, 655) genannt - eines Netzwerkbetreibers (550, 560), wobei der "SSI-M" (415, 420, 510, 525, 655) das Bereitstellen von an eine Dezentralisierte Kennung gebundenen verifizierbaren Anmeldedaten, DID-gebundenen VC (205) an Netzwerkelemente des Netzwerks des Netzwerkbetreibers (550, 560) oder an Netzwerkelemente eines zweiten Betreibers (560) verwaltet und dazu eingerichtet ist,
• VC zu erstellen und die VC an die DID zu binden, woraus sich die DID-gebundenen VC (205) für das Netzwerkelement ergeben, die DID-gebundenen VC (205) digital zu signieren und die DID-gebundenen VC (205) dem Netzwerkelement bereitzustellen.

14. Wurzelelement eines vertrauenswürdigen Emittenten - "SSI-R" (405, 410, 505, 520) genannt - eines Netzwerkbetreibers (550, 560), wobei das "SSI-R" (405, 410, 505, 520) die höchste Vertrauensautorität innerhalb des Netzwerks des Netzwerkbetreibers (550, 560) ist und dazu eingerichtet ist,
• verifizierbare Anmeldeinformationen, VC, zu erstellen und die VC an eine Dezentralisierte Kennung, DID, zu binden, woraus sich DID-gebundene VC (205) für das Netzwerkelement ergeben, die DID-gebundenen VC (205) digital zu signieren und die signierten DID-gebundenen VC (205) dem Netzwerkelement bereitzustellen;
• eine digitale Signatur zu erzeugen;
• eine Betreiber-DID zu speichern und/oder bereitzustellen; und/oder
• dem SSI-M (415, 420, 510, 525, 655) nach Anspruch 13 das Recht zu erteilen, die VC zu erstellen und die VC an die DID zu binden, woraus die DID-gebundenen VC für das Netzwerkelement resultieren.

15. Kommunikationssystem, dazu eingerichtet, das Verfahren nach einem der Ansprüche 1 bis 11 auszuführen.

## Revendications

1. Procédé permettant la mise en œuvre au sein d'une infrastructure de réseau d'un opérateur de réseau (550, 560) comprenant les étapes suivantes :
• fourniture et/ou création d'un identifiant décentralisé « DID », d'une clé privée, d'une clé publique et de justificatifs d'identité vérifiables « VC » pour l'élément de réseau (200, 425, 530, 810) ;
• liaison du VC au DID, ce qui donne un VC lié au DID (205) et ajout d'une signature numérique d'un émetteur au VC lié au DID (205) ;
• fourniture du VC lié au DID et de la clé privée à l'élément de réseau (200, 425, 530, 810).

2. Procédé selon la revendication 1, dans lequel l'élément de réseau (200, 425, 530, 810) est fourni sous forme de réalisation matérielle et/ou de réalisation logicielle pour le processus d'implémentation de l'opérateur de réseau (550, 560), dans lequel la réalisation logicielle de l'élément de réseau est instanciée par l'opérateur de réseau (550, 560) ou par un autre opérateur de réseau (550, 560) en créant un composant logiciel comprenant le VC lié au DID (205).

3. Procédé selon la revendication 2, dans lequel le processus d'instanciation est effectué avant le processus d'implémentation.

4. Procédé selon les revendications 2 à 3, dans lequel le composant logiciel est combiné, notamment par un orchestrateur de l'opérateur de réseau (550, 560), à un logiciel de portefeuille pour permettre un stockage sécurisé des identifiants.

5. Procédé selon une quelconque des revendications, dans lequel le DID, la clé privée et/ou la clé publique sont créés par l'élément de réseau et/ou par une fonction de gestion de DID « DMF » (645).

6. Procédé selon une quelconque des revendications, dans lequel la création du VC lié au DID (205) est effectuée par au moins un élément gestionnaire d'émetteur de confiance (415, 420, 510, 525, 655) - appelé « SSI-M » (415, 420, 510, 525, 655) - et/ou par un élément racine d'émetteur de confiance (405, 410, 505, 520) - appelé « SSI-R » (405, 410, 505, 520) - d'un premier opérateur de réseau (550) et/ou d'un deuxième opérateur de réseau (560).

7. Procédé selon la revendication 6, dans lequel le SSI-R (405, 410, 505, 520) est l'autorité de confiance la plus élevée au sein du réseau du premier opérateur de réseau (550) ou du deuxième opérateur de réseau (560), dans lequel le SSI-R (405, 410, 505, 520) accorde le droit à au moins un SSI-M (415, 420, 510, 525, 655) de créer les VCs et de lier le VC au DID, ce qui crée le VC lié au DID pour l'élément de réseau.

8. Procédé selon les revendications 6 à 7, dans lequel le SSI-R (405, 410, 505, 520) détient un DID d'opérateur du premier opérateur de réseau ou du deuxième opérateur de réseau, dans lequel le DID d'opérateur est également stocké dans le VC lié au DID (205).

9. Procédé selon les revendications 1 ou 6 à 8, dans lequel le SSI-R (405, 410, 505, 520), un des SSI-M (415, 420, 510, 525, 655) ou une fonction de gestion DID « DMF » (645) stocke le DID de l'élément de réseau, le DID du SSI-R et/ou le DID du SSI-M dans une base de données VDR de confiance (515, 640).

10. Procédé selon une quelconque des revendications, dans lequel l'élément de réseau (200, 425, 530, 810) fournit son VC lié au DID (205) lors du processus de mise en œuvre à un deuxième élément de réseau (540) et/ou au SSI-M pour s'authentifier et/ou s'autoriser, dans lequel le deuxième élément de réseau (540) reçoit également la clé publique de l'élément de réseau (200, 425, 530, 810), dans lequel le deuxième élément de réseau (540) est exploité par le premier opérateur de réseau (550) ou un deuxième opérateur de réseau (560).

11. Procédé selon la revendication 10, dans lequel le deuxième élément de réseau (540) et/ou le SSI-M (415, 420, 510, 525, 655) vérifie la signature du VC lié au DID (205) et dans lequel l'élément de réseau (200, 425, 530, 810) est authentifié et/ou autorisé si la signature du VC lié au DID (205) est valide.

12. Elément de réseau destiné à être implémenté dans une infrastructure de réseau d'un opérateur, dans lequel l'élément de réseau (200, 425, 530, 810) comprend un justificatif d'identité vérifiable lié à un identifiant décentralisé, un VC lié au DID (205), avec une signature numérique d'un émetteur et une clé privée, dans lequel l'élément de réseau (200, 425, 530, 810) est configuré pour s'authentifier et/ou s'autoriser en envoyant son VC lié au DID à un autre élément de réseau (540).

13. Gestionnaire racine d'émetteur de confiance, appelé « SSI-M » (415, 420, 510, 525, 655), d'un opérateur de réseau (550, 560), dans lequel le « SSI-M » (415, 420, 510, 525, 655) parvient à fournir des justificatifs d'identité vérifiables liés à un identifiant décentralisé, des VCs liés à un DID (205) aux éléments de réseau du réseau de l'opérateur de réseau (550, 560) ou aux éléments de réseau d'un deuxième opérateur (560) et est configuré pour
• créer un VC et lier le VC au DID, ce qui donne le VC lié au DID (205) pour l'élément de réseau, pour signer numériquement le VC lié au DID (205) et pour fournir le VC lié au DID (205)à l'élément de réseau.

14. Elément racine d'émetteur de confiance, appelé « SSI-R » (405, 410, 505, 520), d'un opérateur de réseau (550, 560), dans lequel le « SSI-R » (405, 410, 505, 520) est l'autorité de confiance la plus élevée au sein du réseau de l'opérateur de réseau (550, 560) et est configuré pour
• créer un justificatif d'identité vérifiable, VC, et lier le VC à un identifiant décentralisé, DID, produisant un VC (205) lié au DID pour l'élément de réseau, pour signer numériquement le VC (205) lié au DID et pour fournir le VC (205) lié au DID signé à l'élément de réseau ;
• créer une signature numérique afin de stocker et/ou fournir un DID opérateur ; et/ou
• accorder le droit au SSI-M (415, 420, 510, 525, 655) selon la revendication 13 de créer les VCs et lier le VC au DID, en produisant ainsi le VC lié au DID pour l'élément de réseau.

15. Système de communication configuré pour exécuter le procédé selon une quelconque des revendications 1 à 11.
